# EUROPEAN PATENT APPLICATION

(11) **EP 1 359 359 A1**
(43) Date of publication of application: **05.11.2003**
(21) Application number: 02076686.1
(22) Date of filing: 29.04.2002
(51) Int. Cl.: F16L 15/04

(54) **Screw thread connector seal**

(71) Applicant: SHELL INTERNATIONALE RESEARCH MAATSCHAPPIJ B.V., 2596 HR Den Haag (NL)
(72) Inventor: Cole, Anthony Thomas, 2288 GD Rijswijk (NL)

(57) **Abstract**

A screw thread connection between adjacent oilfield tubulars is sealed off by inserting a self-setting elastomeric composition into a helical gap between the adjacent male and female screw-thread profiles.

Preferably, said helical gap is shaped by machining a helical groove along at least a substantial part of the length of the male and/or female screw thread profile and an elastomer injection port is drilled through the wall of one of the tubulars such that said port debouches into said helical gap, whereupon the elastomeric composition is injected through a one way valve within said injection port into said gap.

## Description

### FIELD OF THE INVENTION

The invention relates to a method of sealing a screw thread connection between oilfield tubulars.

Oilfield tubulars, such as drill pipes, production tubing strings and well casing strings that are used in oil and/or gas production wells are commonly screwed together by tapered or cylindrical screw thread connectors that have to be made up or disconnected quickly to reduce the string (dis-)assembly time to a minimum level.

The screw thread connectors are generally equipped with metal to metal or rubber sealing rings to seal off the potential leak path provided between the helical screw thread profiles of the male and female connector part. These metal to metal or rubber sealing rings are fragile and vulnerable to leakage if debris is present between the circular sealing surfaces when the tubulars are being screwed together.

It is also known to seal of screw thread connectors in domestic gas or water conduits by inserting organic fibres or polytretrafluorethene (PTFE) tape, marketed under the trademark `TEFLON', between the helical screw threads to seal off the potential leak path between the helical screw thread profiles. However, inserting such fibres or tape between screw thread connectors is time consuming and not practical for oilfield tubulars.

It is an object of the present invention to provide a method for sealing off screw thread connectors of oilfield tubulars in a quick, cost effective and reliable manner.

### SUMMARY OF THE INVENTION

In accordance with the invention there is provided a novel method of sealing a screw thread connection between adjacent oilfield tubulars. The method comprises inserting a self-setting elastomeric composition into a helical gap between adjacent male and female screw-thread profiles at the ends of the oilfield tubulars and allowing the elastomeric composition to set and seal off said gap.

To ensure an equal distribution of elastomer throughout the length of said helical gap it is preferred that a helical groove is machined along at least a substantial part of the length of the male and/or female profile and an elastomer injection port is drilled through the wall of one of the tubulars such that said port debouches into said helical gap and wherein the elastomeric composition is injected through said injection port into said gap.

The elastomer injection port may comprise a one-way valve which prevents the elastomeric composition to flow back from the helical gap into the elastomer injection port.

Preferably the self-setting composition is a rubber composition, which expands during solidification such as nitryl rubbers, fluoroelastomers and perfluoroelastomers.

Alternatively the elastomeric composition is cladded by painting or spraying onto the surface of at least one of said screw-thread profiles before the profiles are screwed together. In such case it is preferred that the elastomeric composition comprises granules of a solid lubricant, such as graphite and/or polytetrafluoroethene (PTFE) to reduce friction when the tubulars are screwed together.

## Claims

1. A method of sealing a screw thread connection between adjacent oilfield tubulars, the method comprising inserting a self-setting elastomeric composition into a helical gap between adjacent male and female screw-thread profiles at the ends of said oilfield tubulars and allowing the elastomeric composition to set and seal off said gap.

2. The method of claim 1, wherein said helical gap is formed by machining a helical groove along at least a substantial part of the length of the male and/or female profile and an elastomer injection port is drilled through the wall of one of the tubulars such that said port debouches into said helical gap and wherein the elastomeric composition is injected through said injection port into said gap.

3. The method of claim 2, wherein said elastomer injection port comprises a one way valve which prevents the elastomeric composition to flow back from the gap into the elastomer injection port.

4. The method of claim 1, wherein the self-setting composition is a rubber composition, which expands during solidification.

5. The method of claim 1, wherein the elastomeric composition is cladded on the surface of at least one of said screw-thread profiles before the profiles are screwed together.

6. The method of claim 5, wherein the elastomeric composition comprises granules of a solid lubricant, such as graphite and/or polytetrafluoroethene (PTFE) to reduce friction when the tubulars are screwed together.
